# EUROPÄISCHE PATENTSCHRIFT

(11) **EP 3 831 047 B1**
(45) Veröffentlichungstag und Bekanntmachung des Hinweises auf die Patenterteilung: **06.11.2024**
(21) Anmeldenummer: 19765216.7
(22) Anmeldetag: 03.09.2019
(51) Int. Cl.: H04N 5/222, H04N 5/272, G06T 19/00, H04N 5/262

(54) **VIRTUELLE DREIDIMENSIONALE OBJEKTE IN EINEM LIVEVIDEO**
VIRTUAL THREE-DIMENSIONAL OBJECTS IN A LIVE VIDEO
OBJETS VIRTUELS TRIDIMENSIONNELS DANS UNE VIDÉO EN DIRECT

(30) Priorität: 13.09.2018 DE 102018122435
(43) Veröffentlichungstag der Anmeldung: 09.06.2021
(73) Patentinhaber: TrackMen GmbH, 51105 Köln (DE)
(72) Erfinder: MIKA, Thorsten, 42799 Leichlingen (DE); FEHLIS, Hendrik, 53119 Bonn (DE)
(74) Vertreter: Patentanwälte Bauer Vorberg Kayser
(86) Internationale Anmeldenummer: PCT/EP2019/073439
(87) Internationale Veröffentlichungsnummer: WO 2020/053032

(56) Entgegenhaltungen:
- EP-A2- 0 772 350
- DE-A1- 102004 046 144
- DE-A1- 102005 005 795
- US-A1- 2015 358 508

## Beschreibung

Die Erfindung betrifft ein Verfahren zur Darstellung eines dreidimensionalen Objekts in einem realen Umfeld, dargestellt in einem auf einem Monitor wiedergegeben Finalvideo.

Bei Fernseh- und Internetvideoproduktionen werden zunehmend virtuelle Objekte in ein live ausgestrahltes Video eingebettet. Der Zuschauer kann auf den ersten Blick nicht zwischen dem realen Livevideo und dem eingeblendeten virtuellen Objekt unterscheiden. Insbesondere wenn die Kamera während der Liveproduktion bzw. während der Erzeugung des Livevideos ortsfest bleibt, sind virtuelle Einblendungen nahezu nicht mehr als solche erkennbar. Problematisch wird es jedoch, wenn sich die Position der Kamera während der Aufzeichnung ändert, da sich dann auch die Perspektive des eingeblendeten Objekts entsprechend ändern muss.

Beispielsweise werden oftmals Bilder oder Videos von Personen erstellt und diese als zweidimensionales Bild oder Video durch Einblendung in den Raum oder das Studio gestellt. Für den Zuschauer ergibt sich dann ein auf seinem Monitor oder Fernseher dargestelltes Bild, welches größtenteils aus dem Livevideo gebildet ist, in das aber ebenfalls die zweidimensionale Person eingebettet ist.

Wird die Kamera, die das Livebild aufzeichnet, bewegt, sodass sie nicht mehr frontal auf die eingeblendete Person blickt, erscheinen die Abbilder aber immer schmaler. Letztendlich würde man die eingeblendete Person nicht mehr sehen, wenn sich die Kamera um 90° um diese herumbewegt und seitlich von ihr angeordnet ist.

Um diesem Effekt zu vermeiden, gibt es die Möglichkeit, das Bild der eingeblendeten Computergraphik optisch mitzudrehen, wenn die Kamera sich um dieses bewegt. Dadurch wird vermieden, dass das Bild aufgrund des neuen Winkels schmaler erscheint, allerdings sieht man dieses dann aus allen Perspektiven immer nur gerade von vorne, also zweidimensional.

Auch ist bekannt, Objekte, beispielsweise Personen zunächst mithilfe eines dreidimensionalen Scans zu erfassen. Dabei wird bei jeder Aufnahme mit der Kamera auch die Tiefe des Objekts vermessen, um letztendlich ein dreidimensionales Modell des Objekts erstellen zu können. In einem nächsten Verfahrensschritt werden die verschiedenen Aufnahmen des Objekts aus den jeweiligen Perspektiven übereinandergelegt (gemappt) sodass sich der dreidimensionale Körper ergibt. Die einzelnen Aufnahmen werden dabei also im Prinzip Stück für Stück auf den Körper "gespannt". Dies geschieht allerdings abschnittsweise, wobei die Übergänge nicht immer fehlerfrei dargestellt werden können. Auch die dreidimensionale Form des Objekts ist dabei nicht perfekt, was man beispielsweise bei Gesichtern solcher Aufnahmen oftmals erkennen kann, es ergeben sich sogenannte Artefakte. Unabhängig davon ist die Erzeugung solcher dreidimensionalen Scans aufwendig und erfordert ein hohes Datenvolumen, eine Nachbearbeitung per Hand ist ebenfalls notwendig.

Ein weiteres Problem ergibt sich dann, wenn das Objekt beispielsweise eine Person ist und sich im späteren Livevideo bewegen soll. Der dreidimensionale Scan muss dann zusätzlich animiert werden, wozu Kenntnisse bzw. Informationen beispielsweise zu Gelenken und möglichen Bewegungsrichtungen berücksichtigt werden müssen. Auch eine solche Animation ist selten perfekt, es ist in der Regel deutlich erkennbar, dass es sich um ein animiertes Video handelt, die Bewegungen erscheinen oftmals unnatürlich.

Die US 2015/358508 A1 beschreibt ein System zum Drehen eines Videofilms unter Einsatz einer Kamera, eines Trackingmoduls zur Bestimmung der Position der Kamera und eines Kompositionsmoduls zum Erzeugen einer Bildkomposition der Kameraaufnahmen und einer Projektion einer virtuellen Animation, wobei die Projektion in Abhängigkeit der Kameraposition generiert wird.

Aus der DE 10 2005 005795 A1 geht eine Vorrichtung zur Herstellung einer computergestützten Objektanimation hervor. Ein Objekt wird auf einem Drehteller positioniert und mit einer Kamera aus verschiedenen Blickwinkeln jeweils zweidimensional aufgenommen, bis eine vollständige Rundumansicht des Objekts angefertigt ist.

Die EP 0 772 350 A2 beschreibt ein Keying System und ein Verfahren zur Erzeugung von Bildkompositionen. Das System umfasst eine Livekamera zum Abfilmen eines Objekts und eine Speichereinheit, auf der eine Vielzahl von Hintergrundbildern hinterlegt ist, wobei jedes Hintergrundbild einem Betrachtungspunkt in einem dreidimensionalen System hinsichtlich des Winkels zum aufgenommenen Hintergrund und der Position der Objektkamera entspricht. Das System umfasst weiterhin eine Steuereinheit zur Auswahl des hinterlegten Hintergrundbildes, dessen Betrachtungspunkt dem der Livekamera entspricht und eine Keying-Kompositionseinheit, welche das Bild der Livekamera und das ausgewählte Hintergrundbild zusammensetzt. Nachteilig hieran ist, dass die Bildkomposition mittels eines Chroma- und/oder Luminance-Keys erfolgt, also ein starker Kontrast zwischen dem Objekt und einem durch das Hintergrundbild zu überlagernden Bereich notwendig ist und eine Einblendung eines Hintergrundbilds nur an einer Stelle erfolgen kann, die sich kontrastreich vom Rest der Umgebung abhebt.

Die Aufgabe der vorliegenden Erfindung besteht darin, ein virtuelles Objekt in ein erzeugtes Livevideo optisch möglichst ansehnlich einzubinden. Insbesondere sollen Perspektivwechsel durch Bewegen der Livekamera möglich sein, ohne dass das eingeblendete Objektvideo unnatürlich erscheint oder zu stark verzerrt wird. Wesentlich ist aber auch, dass das Verfahren möglichst einfach durchführbar ist. Es soll möglichst wenig Datenvolumen benötigen und insbesondere aucheine manuelle Nachbearbeitung gar nicht oder nur in geringem Maße notwendig machen.

Erfindungsgemäß wird die Aufgabe durch ein Verfahren mit den Verfahrensschritten des Patentanspruchs 1 gelöst.

Die Kernidee der Erfindung besteht demnach darin, dass zunächst ein Objektvideo erzeugt wird, welches das Objekt aus unterschiedlichen Winkeln zeigt. Zu diesem Zweck wird das Objekt also mit einer Abfilmkamera zunächst aus unterschiedlichen Winkeln bzw. Abfilmrichtungen aufgenommen. Die jeweilige Position der Abfilmkamera zum Objekt wird dabei erfasst und gespeichert.

Der Begriff Abfilmrichtung bezieht sich auf eine Zentralachse des Objekts, die beispielsweise die vertikale Hochachse oder die die horizontale Querachse, aber auch jede andere durch das Objekt verlaufende Zentralachse sein kann.

Dieses Objektvideo wird in einem zweiten Verfahrensschritt in eine Computergraphik geladen und erfindungsgemäß auf einem Rechteck (also nur zweidimensional als Videotextur) dargestellt, das im Umfeld, in Folgendem als Studio bezeichnet, positioniert wird. Das Studio wird mit einer Livekamera während der Aufzeichnung abgefilmt und es wird ein Livevideo erzeugt. In diesem erscheint das Objekt für den Zuschauer virtuell an einer bestimmten Stelle im Raum. Selbstverständlich muss es sich bei dem Umfeld nicht um einen geschlossenes Studio handeln, das Livevideo kann auch an beliebigen Orten im Freien erzeugt werden.

Das vom Betrachter wahrnehmbare Video besteht also aus dem Livevideo mit eingebettetem Objektvideo. Zur Vereinfachung wird dieses vom Betrachter wahrnehmbare Video als Finalvideo bezeichnet. Die Anpassung des Objektvideos an die Position der Livekamera erfolgt mit Hilfe eines dafür üblichen Datenverarbeitungsgeräts.

Wesentlich ist, dass beim Abfilmen des Objekts der Relativwinkel zwischen dem Objekt und der Abfilmkamera bekannt ist und später diejenige Videosequenz ermittelbar ist, die unter diesem Relativwinkel abgefilmt wurde.

In einer besonders einfachen Ausführungsvariante kann dafür das Objekt auf einem Drehteller platziert werden, der sich während des Abfilmvorgangs dreht. Die dann ortsfeste Abfilmkamera filmt das Objekt, beispielsweise eine Person, vorzugsweise um 360°kontinuierlich ab. Der Abfilmvorgang erfolgt somit eindimensional, das Objekt wird lediglich um seine Vertikal- oder Hochachse gedreht. Die Zuordnung der Perspektive bzw. des Relativwinkels zu einer bestimmten Videosequenz kann beispielsweise über ein entsprechendes Messgerät am Drehteller erfolgen. Hierfür bietet sich ein Encoder an, der den jeweiligen Grad der Drehung ermittelt. Es kann eine lineare Zuordnung auch dadurch erfolgen, dass die einzelnen aufgenommenen Bilder gezählt werden und dann mit der entsprechenden Gradzahl in Bezug gesetzt werden.

In einer besonders vorteilhaften einfachen Ausführungsvariante wird die gedrehte und abgefilmte Gradzahl des Drehtellers, meist 360 Grad, durch die aufgenommene Anzahl von Videobildern dividiert, woraus sich der Winkel pro Videobild ergibt. Das Berechnungsergebnis ist zwar etwas ungenauer als das Ergebnis eines Enkoders, vereinfacht aber den Aufbau und reicht für die meisten gewünschten Anwendung aus. Dieses Verfahren ist auch für andere Perspektiven einsetzbar, beispielsweise bei einer Drehung des Objekts um seine horizontale Achse bzw. bei einem Abfilmen des statischen bzw. unbewegten Objekts durch Bewegung der Abfilmkamera um die vertikale Achse des Objekts.

In einer besonders einfachen Ausführungsvariante kann der Drehteller auf seiner Außenseite eine sichtbare Skala aufweisen, die beim Abfilmvorgang ebenfalls abgefilmt wird. Somit ist im aufgenommenen Objektvideo erkennbar, aus welcher Perspektive das Objekt zu einem bestimmten Zeitpunkt gefilmt wurde bzw. welche Gradzahl sich zu diesem Zeitpunkt eingestellt hatte. Das Objektvideo wird in diesem Fall ohne die Skala in das Livevideo eingebettet, die sich aus der Skala ergebende gespeicherte Information wird aber trotzdem als Videoeigenschaft für die gewünschte Darstellung verwendet.

In einer alternativen Ausführungsvariante ist das Objekt ortsfest und unbeweglich positioniert. Die Abfilmkamera verändert dann ihre Position, beispielsweise umkreist sie das Objekt einmal um 360° und filmt es dabei kontinuierlich ab. Entsprechend der vorgenannten Ausführungsvariante mit Drehteller wird auch hier die Relativposition bzw. der Relativwinkel zwischen Abfilmkamera und der Zentralachse des Objekts permanent ermittelt und gespeichert.

Beide Varianten erzeugen ein Objektvideo, welches das Objekt aus verschiedenen Richtungen zeigt, vorzugsweise über volle 360°.

Wesentlich ist, dass auch die Position der aufzeichnenden Livekamera permanent ermittelt wird. Hierfür sind übliche sogenannte Tracking-Systeme verwendbar. Ändert sich nun der Relativwinkel zwischen dem eingeblendeten Objekt, also dem Rechteck bzw. dem darin gezeigten Objektvideo, wird erfindungsgemäß jeweils diejenige Videosequenz des Objektvideos abgespielt, die dem Relativwinkel der Livekamera zum virtuellen Objekt entspricht. Bewegt sich also die Livekamera um das virtuelle Objekt herum, wird dieses über gezieltes Abspielen des Objektvideos nachgeführt und erscheint stets aus der richtigen Perspektive. Das Objektvideo wird für diesen Zweck entsprechend vor- oder zurückgespielt. Dadurch erscheint das Objekt, beispielsweise eine Person, in dem gezeigten Finalvideo stets so, wie der Betrachter sie im Studio sehen würde, wenn sie real wäre.

Das erfindungsgemäßer Verfahren kann weiterhin dadurch verbessert werden, dass das Objektvideo mit möglichst hoher Auflösung aufgenommen wird. Dadurch ist es möglich, bei der späteren Wiedergabe durch Hereinzoomen auch Teilbereiche des Objekts deutlich zu zeigen.

Weiterhin kann sich das Objekt im Gegensatz zu den Verfahren nach dem Stand der Technik während des Abfilmens auch bewegen, was insbesondere beim Abfilmen von Personen vorteilhaft ist. Beispielsweise können eine Kopfdrehung oder eine Bewegung der Augen, aber letztendlich auch komplexere Bewegungen abgefilmt werden. Diese sind zwar bei der Reproduktion im Finalvideo immer die gleichen, aber es kommt zu einer sehr natürlichen Bewegung, anders als bei den bekannten gescannten und animierten Figuren oder Verfahren. Dreht sich beispielsweise die Person um die eigene Hochachse, während sich die Abfilmkamera um diese bewegt, sollte bei der Aufzeichnung des Livevideos darauf geachtet werden, dass die Bewegung der Livekamera der Bewegung der Abfilmkamera entspricht. Andernfalls würden die Bewegungen langsamer oder auch schneller ausgeführt werden und erscheinen dadurch unnatürlich.

Grundsätzlich ist es auch möglich, mehrere Objekte gleichzeitig aufzunehmen, um natürliche Verdeckungen oder Schattenwurf abzubilden. Alternativ können verschiedene Objekte auch einzeln aufgenommen und später im Objektvideo zusammengeführt werden.

Erfindungsgemäß ist es auch möglich, den Drehteller während des Abfilmens zu neigen, um dadurch einen anderen Abfilmwinkel zur Abfilmkamera einzustellen.

Alternativ zur Anordnung des Objekts auf einem Drehteller, der sich um seine Hochachse dreht, kann gemäß der Erfindung auch eine Anordnung an einer horizontalenWelle, die sich dementsprechend um die horizontale Achse dreht, erfolgen. Dies kann beispielsweise bei Objekten vorteilhaft sein, die auch von oben betrachtet werden sollen. Denkbar sind hier beispielsweise Möbelstücke, Modelle von Gebäuden, Pflanzen und Ähnliches.

Die Objekte können erfindungsgemäß also an einer sich drehenden horizontalen Welle befestigt, und von einer ortsfesten Kamera abgefilmt werden. Alternativ ist es natürlich ebenfalls möglich, die Abfilmkamera in einer vertikalen Ebene um ein ortsfestes Objekt herum zu führen.

Als zusätzliche Dimension kann während des Abfilmens auch die Entfernung der Abfilmkamera vom Objekt erfasst und gespeichert werden. Somit ist es möglich, auch während der Erzeugung des Live- bzw. des Finalvideos die Entfernung mit der Livekamera zum virtuellen Objekt zu verändern da das Objektvideo entsprechend angepasst werden kann.

Erfindungsgemäß kann in einer besonders einfachen Variante des erfindungsgemäßen Verfahrens auch auf die Erfassung der Entfernung der Abfilmkamera verzichtet werden. Das Objektvideo bzw. die Videotextur (der Bereich im Finalvideo, auf den das Video sozusagen aufgespannt ist, ist ortsfest im Umfeld angeordnet. Wenn sich die Livekamera entfernt, wird diese Bewegung durch das Kameratrackingsystem gemessen und die virtuelle Szene, also das Objektvideo bzw. der Bereich, auf den es aufgespannt ist, entsprechend verschoben. Sie wird dann automatisch kleiner oder größer, da sich die Livekamera ja bewegt, entsprechend einem natürlichen Objekt. Da man nur einen Ausschnitt des Bildes erhält, ist die Perspektive leicht gestaucht oder gestreckt, das Objekt bekommt damit einen etwas flacheren oder steileren Tiefeneindruck. Die Perspektive auf das Objekt ist somit dann zwar nicht die Richtige, da aber die Tiefe des Objekts beispielsweise bei Menschen sehr gering ist, wird dies vom Zuschauer kaum wahrgenommen, das Auge ist dafür sehr unkritisch. Somit ist es möglich, den Aufwand und die Datenmenge weiter zu reduzieren.

Gleiches gilt auch für die Höhe der Kamera, die ebenfalls bei Erzeugen des Objektvideos verändert und gemessen werden kann. Dies erlaubt dementsprechend eine Veränderung der Höhe der Livekamera während der Erzeugung des Finalvideos.

Letztendlich ist es erfindungsgemäß zwar möglich, das Objekt aus sämtlichen Richtungen abzufilmen, um in einem späteren Finalvideo auch sämtliche Richtungen darstellen zu können. Es hat sich aber als besonders vorteilhaft erwiesen, wenn eine möglichst einfache, vorzugsweise eindimensionale Aufnahme erzeugt wird, da dadurch insbesondere das Datenvolumen geringgehalten wird. Die meisten Studioaufnahmen werden ohnehin eindimensional erzeugt, die Livekamera bleibt während der Aufnahme üblicherweise auf gleicher Höhe.

In einer weiteren vorteilhaften Ausführungsvariante der Erfindung ist es auch möglich, das Objektvideo ebenfalls live zu erzeugen und als zweites Livevideo in das erste von der Livekamera aufgenommene Livevideo einzublenden. Während der Liveaufnahme im Studio wird dabei die Position der Livekamera mit einem geeigneten Kameratrackingsystem gemessen. Statt nun aber die passende Stelle im Video zu suchen, wird der Drehteller in Abhängigkeit von der Position der Livekamera gedreht, sozusagen gesteuert. Das Objekt bzw. die Person befindet sich zeitgleich, also live auf dem Drehteller Ein besonderer Vorteil besteht darin, dass sich die Person live bewegen und auch auf das Live-Geschehen reagieren kann, der Drehteller dreht die Person dabei immer in die passende Richtung, die die Position der Livekamera vorgibt. Das Objektvideo wird somit nicht zwischengespeichert, sondern ebenfalls als zweites Livevideo innerhalb des ersten Livevideos live gesendet.

Die Erfindung wird anhand der nachfolgenden Figuren näher erläutert. Diese sollen das Prinzip der Erfindung lediglich verdeutlichen, sie sollen die Erfindung aber nicht auf die gezeigten Ausführungsbeispiele beschränken. Es zeigen:
- Figur 1:: einen Drehteller mit Objekt und Abfilmkamera,
- Figur 2:: eine Vorrichtung für eine horizontale Drehung des Objekts und eine Abfilmkamera,
- Figur 3:: ein Umfeld für die Erzeugung eines Finalvideos,
- Figur 4.: eine vereinfachte Darstellung des Finalvideos aus einer ersten Perspektive,
- Figur 5:: eine vereinfachte Darstellung des Finalvideos aus einer zweiten Perspektive.

Es wird darauf hingewiesen, dass die Figuren stark vereinfacht gezeichnet sind, insbesondere sind sie nicht maßstabsgetreu.

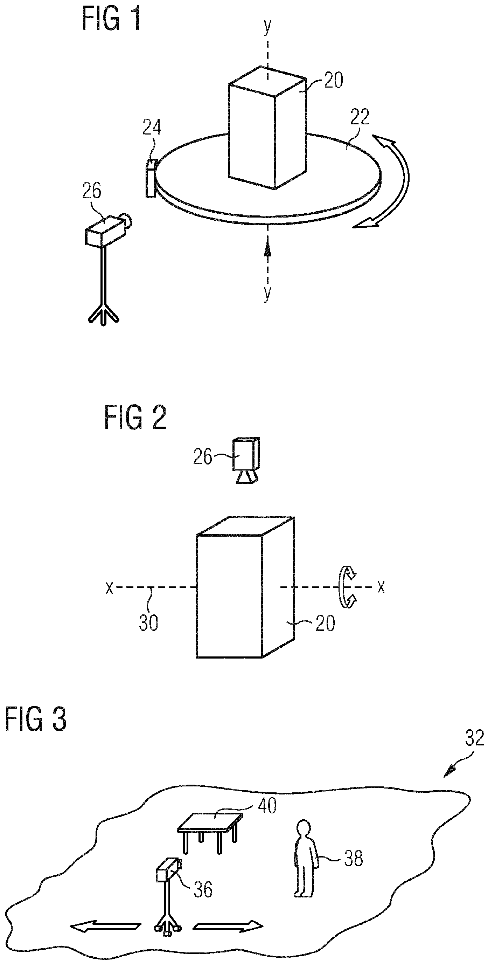

Figur 1 verdeutlicht eine erste Möglichkeit zur Erzeugung eines Objektvideos. Ein abzufilmendes Objekt 20 ist auf einem Drehteller 22 angeordnet. An dem Drehteller 22 ist ein Messgerät für die Erfassung einer Verdrehung des Drehtellers 22, also des Drehwinkels vorgesehen. Das Messgerät 24 steht dabei mit einem nicht gezeigten Datenverarbeitungsgerät in Verbindung.

Eine Abfilmkamera 26 ist ortsfest angeordnet und filmt das Objekt 20 während sich der Drehteller 22 dreht und dessen Rotation vom Messgerät 24 erfasst wird. Auf diese Weise wird ein Objektvideo 28 erzeugt, das das Objekt 20 aus verschiedenen Abfilmrichtungen zeigt. Im gezeigten Ausführungsbeispiel bildet die Hochachse Y-Y eine Zentralachse, auf die sich die Abfilmrichtung bezieht. Grundsätzlich kann dabei der Drehteller 22 nur um einige wenige Grad, aber auch um 360° oder auch 720° gedreht werden, letztendlich ist dies von den Anforderungen an das zu erzeugende Objektvideo 28 abhängig. Die Drehung um 720° bewirkt, dass keine Anschlussfehler oder Nahtstellen entstehen, wenn man sich ganz um das Objekt bewegt.

Figur 2 zeigt eine Alternative, bei der das Objekt an einer horizontal ausgerichteten Welle 30 festgelegt ist. Die Abfilmkamera 26 ist ebenfalls ortsfest und in einer festgelegten Höhe oberhalb des Objekts 20 angeordnet. Selbstverständlich kann die Abfilmkamera 26 auch unterhalb oder seitlich des Objekts positioniert sein. In diesem Ausführungsbeispiel bildet die vertikale Achse X-X die Zentralachse aus, auf die sich die Abfilmrichtung bezieht.

Figur 3 zeigt ein beispielhaftes Umfeld 32, in dem ein Livevideo 34 erzeugt werden soll. Das Umfeld ist üblicherweise ein Studio für eine Fernsehproduktion. Eine Livekamera 36 erzeugt das Livevideo 34 und filmt beispielsweise eine Person 38 und einen Gegenstand 40, dargestellt als Tisch. Die Livekamera 36 kann im Umfeld 32 verfahren werden, also ihre Position ändern.

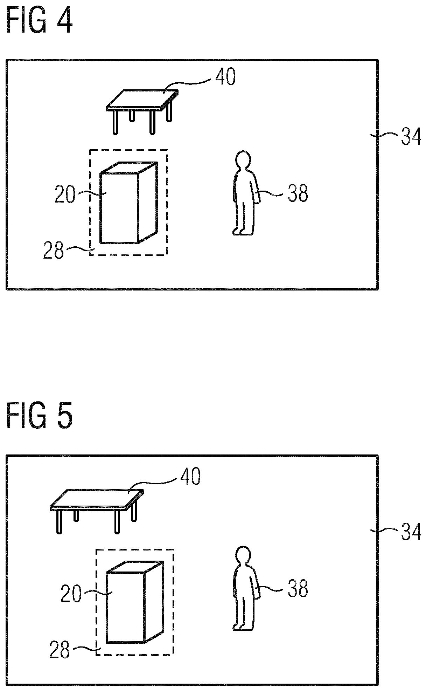

Die Figuren 4 und 5 verdeutlichen ein erzeugtes Finalvideo 42, das aus dem aufgezeichneten Livevideo 34 und dem Objektvideo 28 gebildet ist. Das Objektvideo 28 ist in das Livevideo 34 eingebettet, sodass das Objekt 20 für den Zuschauer ortsfest im Umfeld 32 erscheint. Ein solches Finalvideo 42 wird beispielsweise über einen Fernsehsender auf Fernsehgeräten ausgestrahlt.

Die Figuren 4 und 5 verdeutlichen den Effekt, der entsteht, wenn die Livekamera 36 ihre Position um Umfeld 32 ändert. Es ändert sich die Perspektive zum Objekt 20, das erfindungsgemäß aber trotzdem perspektivisch korrekt dargestellt wird.

Die Erfindung ist nicht auf die beschriebenen und gezeigten Ausführungsvarianten beschränkt, sondern umfasst auch weitere Möglichkeiten, die auf Basis der Erfindung realisierbar sind. Beispielsweise können in das Finalvideo 42 auch mehrere Objektvideos 28 eingebettet sein. Beispielsweise können auch zwei oder mehrere ebenfalls live aufgenommene Objektvideos 28 eingebettet sein, beispielsweise mehrere einzelne Personen. Die Erfindung wird durch den unabhängigen Anspruch definiert.

## Patentansprüche

1. Verfahren zur Darstellung eines dreidimensionalen Objekts (20) in einem realen Umfeld (32), dargestellt in einem auf einem Monitor wiedergegebenen Finalvideo (42), aufweisend die Verfahrensschritte
- Erzeugen zumindest eines Objektvideos (28) durch Abfilmen des Objekts (20) mit einer Abfilmkamera (26) aus verschiedenen Abfilmrichtungen zur Erzeugung eines Objektvideos (28), wobei für die jeweilige Abfilmrichtung jeweils der Winkel einer optischen Achse der Abfilmkamera (26) in Bezug auf eine Zentralachse des Objekts (20) bestimmt wird, sodass jeder Abfilmrichtung ein Winkel zugeordnet werden kann,
- Laden des Objektvideos (28) in eine Computergraphik, darstellen des Objektvideos (28) auf einem Rechteck, und positionieren des Rechtecks im Umfeld (32),
- Erzeugen eines Livevideos (34), mit mindestens einer Livekamera (36) und gleichzeitiges Einblenden des Objektvideos (28) in das Livevideo (34) an einer definierten Position im Umfeld (32) zur Erzeugung des Finalvideos (42),
- Ändern eines Relativwinkels zwischen dem Rechteck mit dem darin gezeigten Objektvideo (28) und der Livekamera (36) durch Ändern der Position der Livekamera (36) im Umfeld (32) und gleichzeitig Darstellen des Objekts (20) im Finalvideo (46) in einer gewünschten Perspektive im Umfeld (32) dadurch, dass
- die jeweilige Position der Livekamera (36) im Umfeld (32) während der Aufnahme des Livevideos (34) ermittelt wird,
- jeweils diejenige Videosequenz des Objektvideos (28) abgespielt wird, die dem Relativwinkel der Livekamera (36) zum Objekt (20) entspricht, so dass das Objektvideo (28) an die ermittelte Position der Livekamera (36) angepasst das Objekt (20) im Finalvideo (46) aus derjenigen Richtung zeigt, die etwa der Richtung der Livekamera (36) zur gewünschten Position des Objekts (20) im Umfeld (29) entspricht.

2. Verfahren nach Anspruch 1, **dadurch gekennzeichnet, dass** das Abfilmen des Objekts (20) umfasst
- Ortsfestes Anordnen der Abfilmkamera (26),
- Drehen des Objekts (20) um seine Hochachse (Y-Y).

3. Verfahren nach Anspruch 2, **dadurch gekennzeichnet, dass** das Abfilmen des Objekts (20) umfasst
- Positionieren des Objekts (20) auf einem Drehteller (22),
- Drehen des Drehtellers (22) und gleichzeitiges Abfilmen des Objekts (20) mit der Abfilmkamera (26),
- Bestimmen der Abfilmrichtung durch Ermitteln der Gradzahl der Verdrehung des Drehtellers (22).

4. Verfahren nach Anspruch 1, **dadurch gekennzeichnet, dass** das Abfilmen des Objekts (20) umfasst
- ortsfestes Anordnen der Abfilmkamera (26)
- Drehen des Objekts (20) um seine horizontale Achse (X-X).

5. Verfahren nach Anspruch 1, **dadurch gekennzeichnet, dass** das Abfilmen des Objekts (20) umfasst:
- ortsfestes Anordnen der Abfilmkamera (26),
- Drehen des Objekts (20) gleichzeitig um seine Hochachse(Y-Y) und seine vertikale Achse (x-x).

6. Verfahren nach Anspruch 1, **dadurch gekennzeichnet, dass** das Abfilmen des Objekts (20) umfasst
- ortsfestes und statisches Anordnen des Objekts (20),
- Abfilmen des Objekts (20) bei gleichzeitiger Bewegung der Abfilmkamera (26) in einer horizontalen Ebene um das Objekt (20).

7. Verfahren nach Anspruch 1, **dadurch gekennzeichnet, dass** das Abfilmen des Objekts (20) umfasst
- ortsfestes und statisches Anordnen des Objekts (20),
- Abfilmen des Objekts (20) bei gleichzeitiger Bewegung der Abfilmkamera (26) in einer vertikalen Ebene um das Objekt (20).

8. Verfahren nach einem der Ansprüche 1 bis 7, **dadurch gekennzeichnet, dass** die Abfilmkamera (26) während des Abfilmens um mindestens 360°, vorzugsweise um 720° um das Objekt (20) herum bewegt wird.

9. Verfahren nach einem der Ansprüche 1 bis 8, **dadurch gekennzeichnet, dass** die Position der Abfilmkamera (26) beim Abfilmen derart variiert wird, dass das Objekt (20) aus sämtlichen Richtungen abgefilmt wird.

10. Verfahren nach einem der Ansprüche 1 bis 9, **dadurch gekennzeichnet, dass** die Abfilmrichtungen der Abfilmkamera (26) zur Zentralachse des Objekts (20) gespeichert und das Objektvideo (28) an die ermittelte Position der Livekamera (36) im Umfeld (32) durch Abspielen einer Videosequenz des Objektvideos (28) angepasst wird, die das Objekt (20) aus derjenigen Richtung zeigt, die etwa der Richtung der Livekamera (36) zur gewünschten Position des Objekts (20) im Umfeld (29) entspricht.

11. Verfahren nach einem der Ansprüche 1 bis 10, **gekennzeichnet durch** Dividieren der gedrehten und abgefilmten Gradzahl des Objekts (20) durch die aufgenommene Anzahl von Videobildern als Basis für das Auffinden derjenigen Videosequenz die das Objekt (20) im Finalvideo (34) in der gewünschten Perspektive zeigt.

12. Verfahren nach einem der Ansprüche 1 bis 10, **dadurch gekennzeichnet, dass** das zumindest eine Objektvideo (28) als zweites Livevideo in das erste Livevideo eingebettet wird.

## Claims

1. A method for displaying a three-dimensional object (20) in real surroundings (32), displayed in a final video (42) played back on a monitor, having the method steps of
- creating at least one object video (28) by filming the object (20) by means of a film camera (26) from different filming directions for creating an object video (28), wherein the angle of an optical axis of the film camera (26) with respect to a central axis of the object (20) is in each case determined for the respective filming direction, so that an angle can be assigned to each filming direction,
- loading the object video (28) into a computer graphic, displaying the object video (28) on a rectangle and positioning the rectangle in the surroundings (32),
- creating a live video (34) by means of at least one live camera (36) and simultaneously fading the object video (28) into the live video (34) at a defined position in the surroundings (32) for creating the final video (42),
- changing a relative angle between the rectangle with the object video (28) shown therein and the live camera (36) by changing the position of the live camera (36) in the surroundings (32) and simultaneously displaying the object (20) in the final video (46) in a desired perspective in the surroundings (32), in that
- the respective position of the live camera (36) in the surroundings (32) is determined while recording the live video (34),
- that video sequence of the object video (28), which corresponds to the relative angle of the live camera (36) to the object (20), is played, so that the object video (28), adapted to the determined position of the live camera (36), shows the object (20) in the final video (46) from that position, which corresponds approximately to the direction of the live camera (36) to the desired position of the object (20) in the surroundings (29).

2. The method according to claim 1, **characterized in that** the filming of the object (20) comprises
- stationarily arranging the film camera (26),
- turning the object (20) around its normal axis (Y-Y).

3. The method according to claim 2, **characterized in that** the filming of the object (20) comprises
- positioning the object (20) on a turntable (22),
- turning the turntable (22) and simultaneously filming the object (20) by means of the film camera (26),
- determining the filming direction by determining the number of degrees of the turning of the turntable (22).

4. The method according to claim 1, **characterized in that** the filming of the object (20) comprises
- stationarily arranging the film camera (26)
- turning the object (20) around its horizontal axis (X-X).

5. The method according to claim 1, **characterized in that** the filming of the object (20) comprises:
- stationarily arranging the film camera (26),
- simultaneously turning the object (20) around its normal axis (Y-Y) and its vertical axis (x-x).

6. The method according to claim 1, **characterized in that** the filming of the object (20) comprises
- stationarily and statically arranging the object (20),
- filming the object (20) while simultaneously moving the film camera (26) in a horizontal plane around the object (20).

7. The method according to claim 1, **characterized in that** the filming of the object (20) comprises
- stationarily and statically arranging the object (20),
- filming the object (20) while simultaneously moving the film camara (26) in a vertical plane around the object (20).

8. The method according to one of claims 1 to 7, **characterized in that** the film camera (26) is moved by at least 360°, preferably by 720°, around the object (20) during the filming.

9. The method according to one of claims 1 to 8, **characterized in that** the position of the film camera (26) is varied during the filming in such a way that the object (20) is filmed from all directions.

10. The method according to one of claims 1 to 9, **characterized in that** the filming directions of the film camera (26) to the central axis of the object (20) is stored and the object video (28) is adapted to the determined position of the live camara (36) in the surroundings (32) by playing a video sequence of the object video (28), which shows the object (20) from that direction, which corresponds approximately to the direction of the live camera (36) to the desired position of the object (20) in the surroundings (29).

11. The method according to one of claims 1 to 10, **characterized by** dividing the turned and filmed number of degrees of the object (20) by the recorded number of video images as basis for finding that video sequence, which shows the object (20) in the final video (34) in the desired perspective.

12. The method according to one of claims 1 to 10, **characterized in that** the at least one object video (28) is embedded into the first live video as second live video.

## Revendications

1. Procédé de représentation d'un objet tridimensionnel (20) dans un environnement réel (32), représentée dans une vidéo finale (42) lue sur un moniteur, présentant les étapes du processus consistant à :
- générer au moins une vidéo d'objet (28) en filmant l'objet (20) avec une caméra de tournage (26) à partir de différentes directions de tournage pour générer une vidéo d'objet (28), dans lequel l'angle d'un axe optique de la caméra de tournage (26) est déterminé pour la direction de tournage respective par rapport à un axe central de l'objet (20), de telle sorte qu'un angle puisse être attribué à chaque direction de tournage,
- charger la vidéo d'objet (28) dans une infographie, représenter l'objet vidéo (28) sur un rectangle et positionner le rectangle dans l'environnement (32),
- générer une vidéo en direct (34) avec au moins une caméra en direct (36) et incorporer simultanément la vidéo d'objet (28) dans la vidéo en direct (34) à une position définie dans l'environnement (32) pour générer la vidéo finale (42),
- modifier un angle relatif entre le rectangle avec la vidéo d'objet (28) qui y est montré et la caméra en direct (36) en modifiant la position de la caméra en direct (36) dans l'environnement (32) et en représentant simultanément l'objet (20) dans la vidéo finale (46) dans une perspective souhaitée dans l'environnement (32), **caractérisé en ce que**
- la position respective de la caméra en direct (36) dans l'environnement (32) est déterminée pendant l'enregistrement de la vidéo en direct (34),
- la séquence vidéo respective de la vidéo d'objet (28) est lue, qui correspond à l'angle relatif de la caméra en direct (36) sur l'objet (20), de telle sorte que la vidéo d'objet (28) adaptée à la position déterminée de la caméra en direct (36) représente l'objet (20) dans la vidéo finale (46) depuis la direction, qui correspond approximativement à la direction de la caméra en direct (36) jusqu'à la position souhaitée de l'objet (20) dans l'environnement (29).

2. Procédé selon la revendication 1, **caractérisé en ce que** le tournage de l'objet (20) comprend :
- le positionnement fixe de la caméra de tournage (26),
- la rotation de l'objet (20) autour de son axe vertical (Y-Y).

3. Procédé selon la revendication 2, **caractérisé en ce que** le tournage de l'objet (20) comprend :
- le positionnement de l'objet (20) sur un plateau tournant (22),
- la rotation du plateau tournant (22) et le tournage simultané de l'objet (20) avec la caméra de tournage (26),
- la détermination de la direction de tournage en déterminant le nombre de degrés de rotation du plateau tournant (22).

4. Procédé selon la revendication 1, **caractérisé en ce que** le tournage de l'objet (20) comprend :
- le positionnement fixe de la caméra de tournage (26),
- la rotation de l'objet (20) autour de son axe horizontal (X-X).

5. Procédé selon la revendication 1, **caractérisé en ce que** le tournage de l'objet (20) comprend :
- le positionnement fixe de la caméra de tournage (26),
- la rotation de l'objet (20) simultanément autour de son axe vertical (Y-Y) et de son axe vertical (x-x).

6. Procédé selon la revendication 1, **caractérisé en ce que** le tournage de l'objet (20) comprend :
- le positionnement fixe et statique de l'objet (20),
- le tournage de l'objet (20) tout en déplaçant simultanément la caméra de tournage (26) dans un plan horizontal autour de l'objet (20).

7. Procédé selon la revendication 1, **caractérisé en ce que** le tournage de l'objet (20) comprend :
- le positionnement fixe et statique de l'objet (20),
- le tournage de l'objet (20) tout en déplaçant simultanément la caméra de tournage (26) dans un plan vertical autour de l'objet (20).

8. Procédé selon une des revendications 1 à 7, **caractérisé en ce que** la caméra de tournage (26) est déplacée autour de l'objet (20) d'au moins 360°, de préférence de 720°, pendant le tournage.

9. Procédé selon une des revendications 1 à 8, **caractérisé en ce que** l'on fait varier la position de la caméra de tournage (26) pendant le tournage de telle sorte que l'objet (20) soit filmé dans toutes les directions.

10. Procédé selon une des revendications 1 à 9, **caractérisé en ce que** les directions de tournage de la caméra de tournage (26) par rapport à l'axe central de l'objet (20) est mémorisée et la vidéo d'objet (28) est adaptée à la position déterminée de la caméra en direct (36) dans l'environnement (32) par la lecture d'une séquence vidéo de la vidéo d'objet (28), qui montre l'objet (20) à partir d'une direction, qui correspond approximativement à la direction de la caméra en direct (36) à la position souhaitée de l'objet (20) dans l'environnement (29).

11. Procédé selon une des revendications 1 à 10, **caractérisé par** la division du nombre de degrés tourné et filmé de l'objet (20) par le nombre d'images vidéo enregistrées comme base pour trouver la séquence vidéo qui représente l'objet (20) dans la perspective souhaitée dans la vidéo finale (34).

12. Procédé selon une des revendications 1 à 10, **caractérisé en ce que** au moins un objet vidéo (28) est incorporé en tant que deuxième vidéo en direct dans la première vidéo en direct.
